# EUROPÄISCHE PATENTANMELDUNG

(11) **EP 3 629 305 A1**
(43) Veröffentlichungstag der Anmeldung: **01.04.2020**
(21) Anmeldenummer: 19195494.0
(22) Anmeldetag: 05.09.2019
(51) Int. Cl.: G07C 5/08, B60S 3/00, G06Q 10/00

(54) **VORRICHTUNG UND VERFAHREN ZUR ERKENNUNG EINES IST-ZUSTANDES EINES INNENRAUMS EINES PEOPLEMOVERS**

(30) Priorität: 28.09.2018 DE 102018216761
(71) Anmelder: ZF Friedrichshafen AG, 88046 Friedrichshafen (DE)
(72) Erfinder: Angermayer, Jörg, 88046 Friedrichshafen (DE); Kolesch, Christoph, 88400 Biberach (DE); Herzog, Christian, 88045 Friedrichshafen (DE); Weidenbach, Anatol, 88149 Nonnenhorn (DE); Weissenberger, Sarah, 88046 Friedrichshafen (DE)

(57) **Zusammenfassung**

Vorrichtung (10) zur Erkennung eines Ist-Zustandes eines Innenraums (1) eines Peoplemovers (2) umfassend wenigstens einen bildgebenden Sensor (11) zur Erfassung des Ist-Zustandes des Innenraums (1) eine Auswerteeinrichtung (12), die ausgeführt ist, einen Soll-Zustand des Innenraums (1) zu erhalten, den Ist-Zustand mit dem Soll-Zustand zu vergleichen, um eine Abweichung des Ist-Zustandes von dem Soll-Zustand zu bestimmen und in Abhängigkeit der Abweichung ein Signal zur Information eines Betreibers des Peoplemovers (2) über den Ist-Zustand zu erzeugen, und eine Schnittstelle (13), um dem Betreiber das Signal zu übermitteln. Ferner bezieht sich die Erfindung auf ein Verfahren zur Erkennung eines Ist-Zustandes eines Innenraums (1) eines Peoplemovers (2).

## Beschreibung

Die Erfindung bezieht sich auf eine Vorrichtung nach Anspruch 1 und ein Verfahren nach Anspruch 4 jeweils zur Erkennung eines Ist-Zustandes eines Innenraums eines Peoplemovers.

Aus dem Stand der Technik sind Fahrzeuge zum Befördern von Personen und Gütern bekannt. Insbesondere Kleinbusse für Beförderung von Personen auf kurzen Strecken, zum Beispiel in Städten, Werksgeländen, auf einem Universitätscampus, Flughäfen oder Messen, auch als Peoplemover bezeichnet, sind Personenbeförderungsfahrzeuge.

Im Zuge der Automatisierung ist es wichtig, den Innenraum eines Personenbeförderungsfahrzeuges zu überwachen. Derzeit sind Busse im Personennahverkehr beispielsweise mit Kameras ausgerüstet, um die Eingangsbereiche der Busse zu überwachen.

Im öffentlichen Verkehr verschmutzen die Fahrzeuge, z.B. ein Bus, mit der Zeit. Wann der Bus zu reinigen ist, hängt derzeit vom subjektiven Empfinden des Busfahrers ab. Beim autonomen Fahren wird es aber keinen Busfahrer mehr geben.

Hier setzt die Erfindung an. Der Erfindung hat die Aufgabe zugrunde gelegen, die Überwachung von Innenräumen von Kleinbussen hinsichtlich Verschmutzungen und/oder Beschädigungen zu automatisieren, um die Sicherheit beim Transport von Personen zu erhöhen.

Die Aufgabe wird gelöst durch eine Vorrichtung zur Erkennung eines Ist-Zustandes eines Innenraums eines Peoplemovers mit den Merkmalen des Anspruchs 1. Ferner wird die Aufgabe gelöst durch ein Verfahren zur Erkennung eines Ist-Zustandes eines Innenraums eines Peoplemovers mit den Merkmalen des Anspruchs 4.

Weiterbildungen und vorteilhafte Ausgestaltungen sind in den Unteransprüchen angegeben.

Die erfindungsgemäße Vorrichtung ist zur Erkennung eines Ist-Zustandes eines Innenraums eines Peoplemovers ausgeführt. Die Vorrichtung umfasst wenigstens einen bildgebenden Sensor zur Erfassung des Ist-Zustandes des Innenraums. Ferner umfasst die Vorrichtung eine Auswerteeinrichtung. Die Auswerteeinrichtung ist ausgeführt, einen Soll-Zustand des Innenraums zu erhalten. Ferner ist die Auswerteeinrichtung ausgeführt, den Ist-Zustand mit dem Soll-Zustand zu vergleichen, um eine Abweichung des Ist-Zustandes von dem Soll-Zustand zu bestimmen. Außerdem ist die Auswerteeinrichtung ausgeführt, in Abhängigkeit der Abweichung ein Signal zur Information eines Betreibers des Peoplemovers über den Ist-Zustand zu erzeugen. Die Vorrichtung weist des Weiteren eine Schnittstelle auf, um dem Betreiber das Signal zu übermitteln.

Ein Peoplemover im Rahmen der Erfindung ist ein universell ausbau- und einsetzbarer Kleinbus, der insbesondere für den Personennahverkehr ausgerüstet werden kann. Der Peoplemover dient der Beförderung von Personen auf kurzen Strecken, zum Beispiel in Städten, auf Werksgeländen, auf Geländen von Forschungseinrichtungen wie zum Beispiel Universitäten oder außeruniversitären Einrichtungen, Flughäfen oder Messen. Abmessungen in Meter des Peoplemover nach Länge, Breite und Höhe betragen 4,65 x 1,95 x 2,50. Der Peoplemover umfasst bevorzugt 10 Sitzplätze und 5 Stehplätze. Abmessungen in Meter des Passagierraums, das heißt des Raums, in dem Passagiere in den Peoplemover ein- und aussteigen und sich während der Beförderung aufhalten, nach Länge, Breite und Höhe betragen 3,00 x 1,85 x 2,20. Das Leergewicht des Peoplemover beträgt zum Beispiel 2 t. Der Peoplemover umfasst bevorzugt ein elektrisches Antriebssystem, vorzugsweise einen elektrischen Achsantrieb mit einer Leistung von 150 kW, und besitzt eine Batteriekapazität für eine Einsatzdauer von bis zu 10 h. Der Peoplemover ist automatisiert betreibbar, vorzugsweise bis zur Automatisierungsstufe SAE Level 5, das heißt vollautomatisiert oder autonom betreibbar.

Der automatisiert betreibbare Peoplemover umfasst eine technische Ausrüstung, insbesondere Umfelderfassungssystem, eine supercomputing Steuereinheit mit künstlicher Intelligenz und intelligente Aktuatoren, die zur Bewältigung einer Fahreraufgabe, einschließlich Längs- und Querführung, den Peoplemover nach Aktivierung einer entsprechenden automatischen Fahrfunktion, insbesondere einer hoch- oder vollautomatisierten Fahrfunktion nach der Norm SAEJ3016, mit einer Fahrzeugsteuerungseinrichtung steuern kann. Der Peoplemover ist insbesondere für SAE Level 3, 4 und 5 ausgestattet. Insbesondere in einer Übergangszeit zum hoch-/vollautomatisierten Fahren wird die Erfindung auf SAE Level 3 und 4 eingesetzt, um daran anschließend auf SAE Level 5 verwendet zu werden.

Auf SAE Level 3 und 4 ist jeweils noch ein Fahrer, der sogenannte Safety Driver, vorgesehen, der auf Anforderungen zum Eingreifen reagiert, das heißt es gibt ein take-over der Steuerung. Der Peoplemover für SAE Level 3 und 4 umfasst eine Fahrerkabine für den Safety Fahrer. Bei SAE Level 5 kann die Fahrerkabine entfallen. Auch bei Wegfall ist die erfindungsgemäße Anordnung weiter verwendbar.

Ein bildgebender Sensor ist ausgeführt, ein digitales Bild von einem Objekt zu erzeugen. Ein Bildsensor einer Digitalkamera ist beispielsweise ein bildgebender Sensor. Vorteilhafterweise ist der bildgebende Sensor ein TOF-Sensor, das heißt ein Time-Of-Flight-Sensor. Bei dem TOF-Sensor sammelt jeder Pixel des Sensors einfallendes Licht und misst zugleich die Laufzeit, die das Licht benötigt, um von einer Quelle zu einem Objekt und von dem Objekt zurück zum Pixel zu gelangen. Der TOF-Sensor erzeugt damit vorteilhafterweise ein Tiefenbild mit 3D-Informationen.

Der Ist-Zustand des Innenraums ist der aktuell erfasste Zustand des Innenraums. Zum Beispiel sind ein Innenraum mit herumfliegenden Zeitungen oder ein Innenraum, dessen Sitze verschmutzt oder beschädigt sind, Ist-Zustände. Der Soll-Zustand des Innenraums ist ein vorgegebener Zustand. Zum Beispiel sind ein sauberer Zustand oder ein beschädigungsloser Zustand des Innenraums Soll-Zustände. Der Ist-Zustand wird mittels des bildgebenden Sensors in Form eines Digitalbildes erfasst.

Eine Auswerteeinrichtung ist eine Vorrichtung, die eingehende Informationen verarbeitet und ein aus dieser Verarbeitung resultierendes Ergebnis ausgibt. Insbesondere ist eine Auswerteeinrichtung eine elektronische Schaltung, wie zum Beispiel eine zentrale Prozessoreinheit oder ein Grafikprozessor. Die Auswerteeinrichtung ist vorzugsweise als ein System-on-a-Chip des bildgebenden Sensors realisiert, das heißt alle oder zumindest ein großer Teil der Funktionen sind auf dem Chip integriert. Der Chip umfasst vorteilhafterweise beispielsweise einen Mehrkernprozessor mit mehreren zentralen Verarbeitungsprozessoren, im Englischen als Central Processing Unit, abgekürzt CPU, bezeichnet. Der Chip umfasst vorteilhafterweise auch mehrere Grafikprozessoren, im Englischen als Graphic Processing Unit, abgekürzt GPU, bezeichnet. Grafikprozessoren eignen sich besonders vorteilhaft für paralleles Prozessieren von Abläufen. Mit einem derartigen Aufbau ist die Auswerteeinrichtung skalierbar, das heißt die Auswerteeinrichtung kann für verschiedene SAE-Level angepasst werden.

Erfindungsgemäß verarbeitet die Auswerteeinrichtung Digitalbilder, die Ist-Zustände des Innenraums abbilden, und Digitalbilder, die Soll-Zustände des Innenraums abbilden. Die Digitalbilder der Soll-Zustände werden beispielsweise mit dem bildgebenden Sensor erhalten oder von der Auswerteeinrichtung aus einem Cloud-Dienst abgerufen.

Eine Schnittstelle ist eine mechanisches und/oder elektrisches Bauteil zwischen wenigstens zwei Funktionseinheiten, an der ein Austausch von logischen Größen, zum Beispiel Daten, oder physikalischen Größen, zum Beispiel elektrischen Signalen, erfolgt, entweder nur unidirektional oder bidirektional. Der Austausch kann analog oder digital erfolgen. Der Austausch kann drahtlos, vorzugsweise über Funktechnologie, oder drahtgebunden erfolgen.

Ein Betreiber unterhält und stellt bereit einen Peoplemover oder eine Flotte von Peoplemovern. Der Betreiber gibt den Soll-Zustand für den Innenraum vor.

Mit der erfindungsgemäßen Vorrichtung wird der Betreiber automatisch informiert, wenn der Ist-Zustand des Innenraums eines oder mehrerer Peoplemover vom Soll-Zustand abweicht. Die Information erfolgt in Abhängigkeit eines Ausmaßes der Abweichung zwischen Ist- und Soll-Zustand. Damit wird erreicht, dass der Betreiber nicht bei jeder noch so geringfügigen Abweichung des Ist-Zustandes von dem Soll-Zustand informiert wird, sondern erst, wenn die Abweichung eine bestimmte Toleranz überschreitet. Die Toleranz wird vorzugsweise von dem Betreiber vorgegeben. Zum Beispiel soll der Betreiber erst informiert werden, wenn mindestens 30% der Bodenfläche durch herumfliegende Zeitungen bedeckt ist.

Das Signal, das dem Betreiber übertragen wird, ist beispielsweise ein visuelles und/oder akustisches Signal.

Die Vorrichtung ist ausgeführt, in einem Peoplemover derart montiert zu werden, dass das Sichtfeld des bildgebenden Sensors möglichst den kompletten Innenraum des Peoplemovers erfasst.

Vorzugsweise ist die Auswerteeinrichtung ausgeführt, einen Bilderkennungsalgorithmus auszuführen. Der Bilderkennungsalgorithmus umfasst Softwarecodeabschnitte zur Erkennung von Verschmutzungen und/oder Beschädigungen in Bilderfassungen des Innenraums. Ferner ist die Auswerteeinrichtung ausgeführt, in Abhängigkeit des Vergleichs des Ist-Zustandes mit dem Soll-Zustand einen Verschmutzungs- und/oder Beschädigungsgrad des Innenraums zu bestimmen. Der Bilderkennungsalgorithmus ist zur Ausführung in ein Computerprogramm implementiert. Der Bilderkennungsalgorithmus erkennt insbesondere Objekte in Digitalfotos ausgehend von einem background image, in dem diese Objekte nicht vorhanden sind. Insbesondere erkennt der Bilderkennungsalgorithmus auf ebenen Flächen angeordnete Objekte beliebiger Größe. Beispielsweise erkennt der Bilderkennungsalgorithmus auf der Bodenfläche und/oder auf Sitzflächen des Innenraums des Peoplemovers liegende Zeitungen, Verpackungen, Getränke, Speisen, Getränke- und /oder Speisereste. Ferner erkennt der Bilderkennungsalgorithmus Beschädigungen im Innenraum, zum Beispiel beschädigte Sitzpolster.

In einer besonders vorteilhaften Ausgestaltung der Erfindung ist die Auswerteeinrichtung ausgeführt ist, die Abweichung des Ist-Zustandes von dem Soll-Zustand mit Mitteln der künstlichen Intelligenz zu bestimmen.

Künstliche Intelligenz ist ein Oberbegriff für die Automatisierung intelligenten Verhaltens. Beispielsweise lernt ein intelligenter Algorithmus, zweckgerichtet auf neue Informationen zu reagieren. Ein künstliches neuronales Netzwerk, im Englischen als Artificial Neural Network bezeichnet, ist ein intelligenter Algorithmus. Ein intelligenter Algorithmus ist ausgeführt zu lernen, zweckgerichtet auf neue Informationen zu reagieren. Das künstliche neuronale Netzwerk hat beispielsweise gelernt, Zeitungen, Verpackungen, Getränke, Speisen, Getränke- und /oder Speisereste zu erkennen und zu klassifizieren, ohne einen Vergleich mit einem Bild des Soll-Zustandes durchzuführen.

Mit dem erfindungsgemäßen Verfahren wird ein Ist-Zustandes eines Innenraums eines Peoplemovers erkannt. Das Verfahren umfasst die Verfahrensschritte
- Erfassen des Ist-Zustandes des Innenraums mit einem bildgebenden Sensor
- Erhalten eines Soll-Zustandes des Innenraums,
- Vergleichen des Ist-Zustandes mit dem Soll-Zustand
- Bestimmen einer Abweichung des Ist-Zustandes von dem Soll-Zustand
- Erzeugen eines Signals zur Information eines Betreibers des Peoplemovers über den Ist-Zustand in Abhängigkeit der Abweichung,
   und
- Übermitteln des Signals an den Betreiber.

Damit wird der Betreiber automatisch informiert, wenn der Ist-Zustand des Innenraums eines oder mehrerer Peoplemover vom Soll-Zustand abweicht.

Vorzugsweise wird zur Durchführung des Verfahrens eine erfindungsgemäße Vorrichtung verwendet.

Durch die Erfassung des Verschmutzungsgrades und von Beschädigungen werden mit dem Gegenstand der Erfindung zum einen die Sauberkeit und die Instandhaltung von Innenräumen von Peoplemovern automatisiert überwacht. Zum anderen wird dadurch die Sicherheit beim Transport von Personen erhöht, da diese idealerweise einen sauberen Innenraum betreten und sich damit nicht aufgrund von Verschmutzungen und/oder Beschädigungen verletzten.

Die Erfindung wird anhand folgender Figuren und der dazugehörigen Beschreibung anhand von Ausführungsbeispielen erläutert. Es zeigen:
- Fig. 1: ein Ausführungsbeispiel eines Peoplemovers,
- Fig. 2: ein Ausführungsbeispiel einer erfindungsgemäßen Vorrichtung und
- Fig. 3: ein Ausführungsbeispiel eines erfindungsgemäßen Verfahrens.

In den Figuren bezeichnen gleiche Bezugszeichen gleiche oder funktionsähnliche Bezugsteile. Übersichtshalber sind in den einzelnen Figuren nur die für das Verständnis der jeweiligen Figur relevanten Bezugszeichen angegeben. Dabei behalten die nicht mit Bezugszeichen versehenen Bezugsteile ihre ursprüngliche Bedeutung und Funktion bei.

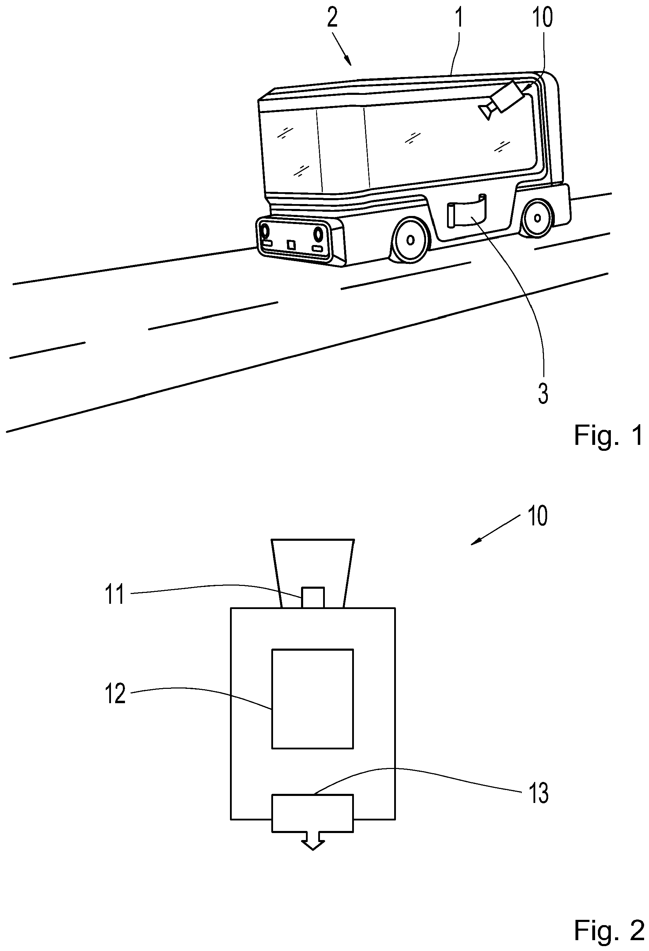

Fig. 1 zeigt einen Peoplemover 2. In einem Innenraum 1 des Peoplemovers 2 ist eine erfindungsgemäße Vorrichtung 10 montiert. Die Vorrichtung 10 erfasst den Innenraum 1. Insbesondere erfasst die Vorrichtung 10 Verschmutzungen und/oder Beschädigungen in dem Innenraum 1. Auf der Bodenfläche des Innenraums 1 liegt ein Objekt 3, beispielsweise eine Zeitung. Dies ist ein Ist-Zustand. In diesem Zustand ist der Innenraum 1 wegen der auf dem Boden liegenden Zeitschrift verschmutzt. Ein Soll-Zustand ist ein sauberer Zustand, in dem keine Zeitung auf dem Boden liegt. Die Vorrichtung 10 vergleicht den Ist-Zustand mit dem Soll-Zustand.

Die Vorrichtung 10 ist im Detail in Fig. 2 gezeigt. Die Vorrichtung 10 umfasst einen bildgebenden Sensor 11. Der bildgebende Sensor 11 ist beispielsweise ein Kamerasensor einer Digitalkamera. Ein Bild des bildgebenden Sensors 11 des aktuellen Innenraums 1, also ein Ist-Zustand, wird an eine Auswerteeinrichtung 12 übergeben. In der Auswerteeinrichtung 12 ist ein Bild eines Soll-Zustandes hinterlegt, beispielsweise in Form eines Bildes des bildgebenden Sensors 11 von einem sauberen Zustand des Innenraums 1. Die Auswerteeinrichtung 12 führt einen Bilderkennungsalgorithmus aus, mit dem das Objekt 3, das in der Aufnahme des Ist-Zustandes vorhanden ist, beispielsweise in einem Vergleich mit der Aufnahme des Soll-Zustandes, in der das Objekt 3 nicht vorhanden ist, erkannt wird. Die Auswerteeinrichtung 12 erzeugt ein visuelles Signal, das das Objekt 3 zeigt, zusammen mit einem akustischen Signal, das ausdrückt, dass das Objekt 3 in dem Innenraum 1 vorhanden ist und der Innenraum 1 zu säubern ist. Diese Signale werden über die Schnittstelle 13, die beispielsweise eine WLAN-Schnittstelle ist, dem Betreiber des Peoplemovers übermittelt.

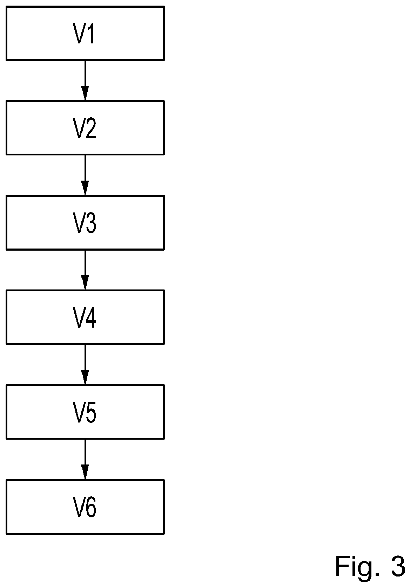

Fig. 3 zeigt beispielhaft das zugrunde liegende Verfahren. In einem ersten Verfahrensschritt V1 wird der Ist-Zustand des Innenraums 1 mit dem bildgebenden Sensor 11 erfasst. In einem zweiten Verfahrensschritt V2 wird der Soll-Zustand des Innenraums 1 erhalten. Ein Vergleichen des Ist-Zustandes mit dem Soll-Zustand erfolgt in einem Verfahrensschritt V3. Ein Bestimmen einer Abweichung des Ist-Zustandes von dem Soll-Zustand erfolgt in einem Verfahrensschritt V4. In einem Verfahrensschritt V5 wird ein Signal zur Information eines Betreibers des Peoplemovers 2 über den Ist-Zustand in Abhängigkeit der Abweichung erzeugt. Ein Übermitteln des Signals an den Betreiber erfolgt in einem Verfahrensschritt V6.

### Bezugszeichen

- 1: Innenraum
- 2: Peoplemover
- 3: Objekt
- 10: Vorrichtung
- 11: bildgebender Sensor
- 12: Auswerteeinrichtung
- 13: Schnittstelle
- V1-V6: Verfahrensschritte

## Patentansprüche

1. Vorrichtung (10) zur Erkennung eines Ist-Zustandes eines Innenraums (1) eines Peoplemovers (2) umfassend
• wenigstens einen bildgebenden Sensor (11) zur Erfassung des Ist-Zustandes des Innenraums (1)
• eine Auswerteeinrichtung (12), die ausgeführt ist,
∘ einen Soll-Zustand des Innenraums (1) zu erhalten,
∘ den Ist-Zustand mit dem Soll-Zustand zu vergleichen, um eine Abweichung des Ist-Zustandes von dem Soll-Zustand zu bestimmen und
∘ in Abhängigkeit der Abweichung ein Signal zur Information eines Betreibers des Peoplemovers (2) über den Ist-Zustand zu erzeugen,
und
• eine Schnittstelle (13), um dem Betreiber das Signal zu übermitteln.

2. Vorrichtung (10) nach Anspruch 1, wobei die Auswerteeinrichtung (12) ausgeführt ist,
• einen Bilderkennungsalgorithmus auszuführen, der Softwarecodeabschnitte zur Erkennung von Verschmutzungen und/oder Beschädigungen in Bilderfassungen des Innenraums (1) umfasst, und
• in Abhängigkeit des Vergleichs des Ist-Zustandes mit dem Soll-Zustand einen Verschmutzungs- und/oder Beschädigungsgrad des Innenraums (1) zu bestimmen.

3. Vorrichtung (10) nach Anspruch 1 oder 2, wobei die Auswerteeinrichtung (12) ausgeführt ist, die Abweichung des Ist-Zustandes von dem Soll-Zustand mit Mitteln der künstlichen Intelligenz zu bestimmen.

4. Verfahren zur Erkennung eines Ist-Zustandes eines Innenraums (1) eines Peoplemovers (2) umfassend die Verfahrensschritte
• Erfassen des Ist-Zustandes des Innenraums (1) mit einem bildgebenden Sensor (11) (V1)
• Erhalten eines Soll-Zustandes des Innenraums (1) (V2),
• Vergleichen des Ist-Zustandes mit dem Soll-Zustand (V3)
• Bestimmen einer Abweichung des Ist-Zustandes von dem Soll-Zustand (V4)
• Erzeugen eines Signal zur Information eines Betreibers des Peoplemovers (2) über den Ist-Zustand in Abhängigkeit der Abweichung (V5),
und
• Übermitteln des Signals an den Betreiber (V6).

5. Verfahren nach Anspruch 4, wobei zur Durchführung des Verfahrens eine Vorrichtung (10) nach einem der Ansprüche 1 bis 3 verwendet wird.
